# EUROPÄISCHE PATENTSCHRIFT

(11) **EP 2 354 477 B1**
(45) Veröffentlichungstag und Bekanntmachung des Hinweises auf die Patenterteilung: **02.10.2013**
(21) Anmeldenummer: 10194092.2
(22) Anmeldetag: 08.12.2010
(51) Int. Cl.: F16C 19/06, F16C 19/26, F01L 1/047, F16C 35/067, F16C 35/07

(54) **Nockenwelle mit Wälzlager, Montageanordnung für eine Nockenwelle mit Wälzlager und Verfahren zur Fertigung**
Camshaft with a roller bearing, installation assembly for a camshaft with a roller bearing and method for producing same
Arbre à came doté d'un palier à roulement, agencement de montage pour un arbre à came doté d'un palier à roulement et procédé de fabrication

(30) Priorität: 27.01.2010 DE 102010005874
(43) Veröffentlichungstag der Anmeldung: 10.08.2011
(73) Patentinhaber: Schaeffler Technologies AG & Co. KG, 91074 Herzogenaurach (DE)
(72) Erfinder: Tisch, Siegfried, 70839 Gerlingen (DE); Kirbach, Lutz, 91074 Herzogenaurach (DE); Löffler, Markus, 71154 Nufringen (DE); Sigle, Bernd, 71384 Weinstadt (DE)

(56) Entgegenhaltungen:
- EP-A1- 1 878 881
- EP-A1- 1 995 417
- EP-A1- 2 078 829
- EP-A2- 1 031 439
- EP-A2- 1 302 691
- WO-A1-01/54925
- WO-A1-89/01101
- WO-A1-2009/072265
- DE-A1-102004 040 224
- DE-A1-102006 031 525
- DE-U1- 29 916 349
- DE-U1-202004 001 454
- JP-A- 2009 030 468
- US-A1- 2002 186 910
- US-A1- 2003 012 475

## Beschreibung

Die Erfindung betrifft eine Nockenwelle, auf der ein Wälzlager angeordnet ist, eine Montageanordnung für eine Nockenwelle mit Wälzlagerung und ein entsprechendes Fertigungsverfahren, um das Wälzlager auf der Nockenwelle anzuordnen.

Um Nockenwellen, insbesondere durch Innenhachdruck Lunformbare Nockenwelle, mit einem Wälzlager zu fertigen, wird bislang das gesamte Wälzlager mit dem Fügeprozess beim Zusammenbau der Welle mit gefügt, wodurch das Wälzlager beim Maßschleifen der Nocken und anderen Lagern mit aufwändigen Maßnahmen wasser- und schmutzdicht abgedeckt werden muss. Falls dies nicht geschieht und das Wälzlager verschmutzt, verliert es im Betrieb schnell seine tadellose Funktionsfähigkeit. Dies kann dazu führen, dass die gesamte Welle ausgetauscht werden muss. Geschieht dies nicht oder nicht rechtzeitig, so können irreparable Motorschäden entstehen.

Ein entsprechendes Wälzlager und ein Verfahren zur Montage eines Wälzlagers ist aus der DE 10 2007 020 306 A1 bekannt. Dort wird vorgeschlagen, ein Wälzlager mit einem Ring, einem Wälzlagerkäfig zur Aufnahme von Wälzkörpern, der den Innenring umfänglich umgibt und einem Außenring, der den Wälzlagerkäfig umfänglich umgibt, zu schaffen. Der Außenring muss zumindest zwei Einzelringe aufweisen, die axial nebeneinander angeordnet sind. Durch die Teilung des Außenrings soll eine Vormontage des Außenrings neben dem Wälzlagerkäfig trotz eines möglicherweise beengten Montageraumes ermöglicht werden.

Ein Verfahren zur Herstellung einer zusammen gebauten Nockenwelle wird auch in der DE 10 2006 004 726 A1 offenbart. Die dort beschriebene Nockenwelle umfasst zwischen den Nocken ein Wälzlager, dessen Wälzkörper radial auf den Körper der Welle abgestützt ist und radial außen von einem ungeteilten Lagerring gehalten wird. Dabei erfolgt der Zusammenbau der Nockenwelle, indem zunächst die erste Nocke auf den Wellenkörper geschoben wird, ehe der Lagerring mit einem zwischen dem Lagerring und dem Wellenkörper angeordneten geteilten Montagering auf den Wellenkörper geschoben wird. Sodann wird die zweite Nocke auf den Wellenkörper gebracht und schließlich wird die Stelle, an der das Wälzlager angeordnet wird, zwischen dem Lagerring und einer Nocke geschliffen. Der Wälzkörper wird in der gewünschten Position fixiert und der Lagerring wird von dem Montagering radial um die Wälzkörper geschoben. Nun kann der Montagering entfernt werden. Damit soll eine einfach herzustellende und kostengünstig gebaute Nockenwelle geschaffen werden.

Vorrichtungen mit einer Nockenwelle mit einem Wälzlager, das eine Wälzlagereinlage, einen Wälzlagerinnenring und einen Wälzlageraußenring umfasst, sind beispielhaft aus der EP 1 878 881 A1. JP 2009 030 468 A, EP 1 995 417 A1, EP 2 078 829 A1 bekannt.

Ausgehend von diesem Stand der Technik ist es erforderlich, eine Nockenwelle mit einer verbesserten Wälzlageranordnung bereitzustellen.

Diese Aufgabe wird mit einer Vorrichtung mit den Merkmalen des Anspruchs 1 gelöst.

Ferner ist es wünschenswert, eine Wälzlagermontagevorrichtung bereitzustellen, die es ermöglicht, die relevante Wälzlagerkomponente selbst beim Beschleifen der Nocken schmutzfrei zu halten.

Diese Aufgabe wird durch die Montagevorrichtung mit den Merkmalen des Anspruchs 6 gelöst.

Darüber hinaus stellt sich die Aufgabe der Schaffung eines Verfahrens, das es ermöglicht, die Montage eines Wälzlagers auf einer Nockenwelle, insbesondere einer durch Innenhochdruck formbare Nockenwelle zu schaffen, ohne dass die Funktionalität des Wälzlagers beeinträchtigende Schmutzpartikel an einer Außenseite des Wälzlagers, respektive an einer Innenseite eines Wälzlageraußenrings abgelegt werden.

Das Verfahren mit den Merkmalen des Anspruchs 8 löst diese Aufgabe.

Eine Ausführungsform einer erfindungsgemäßen Nockenwelle mit Wälzlager, das zumindest eine Wälzlagereinlage und einen Wälzlageraußenring umfasst, sieht vor, dass der Wälzlageraußenring an seinem Außenumfang ein Fixierungselement aufweist, das geeignet ist, das Wälzlager in einer Lageraufnahme, die von Lagerdeckeln eines Kraftfahrzeug-Zylinderkopfes gebildet wird, zu fixieren. Vorteilhaft kann ein Monteur ohne Sichtkontakt durch die Hilfe dieses Fixierungselements eine präzise Montage vornehmen.

Die Wälzlagereinlage kann dabei zur geeigneten Montage auf der ansonsten bereits vormontierten Nockenwelle, die gegebenenfalls schon mit Abschlussflansch versehen ist, eine elastische und geschlitzte oder zweiteilige Wälzlagereinlage sein wie etwa ein geschlitzter oder ein zweiteiliger Nadelkranz, ein Käfig mit Kugeln oder ein Käfig mit Rollen oder ein Käfig mit Kugeln und Rollen.

Grundsätzlich ist es zwar möglich, die Wälziagereinlage direkt auf die Nockenwelle zu setzen, wenn diese geschliffen ist, vorteilhaft kann das Wälzlager jedoch einen Wälzlagerinnenring umfassen, der geschliffen werden kann, ehe er mit der Wälzlagereinlage bestückt wird.

Um den Sitz der Wätziagerein!age auf dem Innenring zu verbessern, können an der Wälzlagereinlage Befestigungsvorrichtungen, insbesondere Halteklammern, angeordnet sein. Dabei erstrecken sich die Halteklammern über einen rechten und einen linken Rand der Wälzlagereinlage und umgreifen den Wälzlagerinnenring. Die Halteklammern können in einer Ausführungsform einstückig mit der Wälzlagereinlage ausgebildet sein.

Um die Montage des Wälzlagers in der Weise auszuführen, dass die Wälzlagereinlage und ein die Wälzlagereinlage umgebender Außenring sauber und trocken bleiben, auch wenn Bearbeitungsschritte der Funktionselemente auf der Welle, wie etwa von Nocken, ausgeführt werden, wird erfindungsgemäß eine Montageanordnung vorgeschlagen. Diese weist einen auf der Nockenwelle angeordneten, nicht durchgängigen Trägerring auf, der zu der Position, an der die Wälzlagereinlage angeordnet werden wird, respektive zu einem auf der Nockenwelle angeordneten Lagerinnenring benachbart angeordnet ist. Der Trägerring trägt einen Wälzlageraußenring, der von dem Trägerring auf die auf den Lagerinnenring aufbringbare Wälzlagereinlage verschiebbar ist.

Der nicht durchgängige Trägerring ist vorteilhaft elastisch und geschlitzt oder zumindest zweiteilig und mehrfach verwendbar.

Das Montageverfahren zur Fertigung einer Nockenwelle mit Wälzlager sieht die Verwendung einer erfindungsgemäßen Montageanordnung vor. Auf der Nockenwelle, sind vor der Montage des Wälzlagers bereits mehrere Funktionselemente wie etwa Nocken angeordnet. Das Verfahren umfasst die Schritte,
- Anordnen des nicht durchgängigen Trägerrings, der einen Wälzlageraußenring trägt, auf der Nockenwelle,
- Innenhochdruckumformen der die Funktionselemente und den Trägerring tragenden Nockenwelle, dabei plastisches Aufweiten der Nockenwelle und elastisches Aufweiten der Funktionselemente,
- Maßschleifen und Endbearbeiten zumindest der Nocken,
- Aufbringen der Wälzlagereinlage auf die Nockenwelle und
- Überführen des Wälzlageraußenrings von dem Trägerring auf die Wälzlagereinlage.

Das Verfahren kann vorsehen, dass als ein Funktionselement ein Wälzlagerinnenring benachbart zu dem Trägerring auf der Nockenwelle angeordnet wird. Der Schritt des Maßschleifens und des Endbearbeitens wird dann entsprechend auch mit dem Wälzlagerinnenring ausgeführt, ehe die Wälzkörpereinlage auf den Wälzlagerinnenring aufgebracht wird und der Wälzlageraußenring von dem Trägerring auf die Wälzlagereinlage überführt wird. Auf diese Weise bleiben die Komponenten des Wälzlagers trotz Schmutz erzeugender Bearbeitungsschritte sauber und können ihre Funktionalität in optimalen Zustand aufnehmen.

Ferner kann der Schritt des Aufbringens der Wälzlagereinlage auf die Nockenwelle das Festlegen von an der Wälzlagereinlage bereitgestellten Befestigungsvorrichtungen, insbesondere von Halteklammern, umfassen, die sich über einen rechten und einen linken Rand der Wälzlagereinlage den Wälzlagerinnenring umgreifend erstrecken. Damit kann eine Axialverschiebung des Wälzlagers auf dem innenring verhindert werden.

Diese und weitere Vorteile werden durch die nachfolgende Beschreibung unter Bezug auf die begleitende Figur dargelegt.

Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigt:
- Fig. 1: eine perspektivische Ansicht einer IHU-Nockenwelle in der Vormontage, vor dem Aufbringen eines Nadelkranzes auf einen Lagerinnenring,
- Fig. 2: eine perspektivische Ansicht der IHU-Nockenwelle, mit montiertem Nadelkranz,
- Fig. 3: eine perspektivische Explosionsansicht unmittelbar vor dem Aufbringen eines Träger- und eines Lagerinnenrings auf die Nockenwelle,
- Fig. 4: eine perspektivische Explosionsansicht nach dem Aufbringen eines Trägerrings auf die Nockenwelle,
- Fig. 5: eine perspektivische Ansicht nach dem Aufbringen eines Trägerrings und eines Lagerinnenrings auf die Nockenwelle,
- Fig. 6: eine Längsschnittansicht einer Nockenwelle, mit einem den Lageraußenring tragenden Trägerring,
- Fig. 7: eine perspektivische Ansicht auf eine Nockenwelle mit montiertem Nadelkranz mit Halteklammern,
- Fig. 8: eine Längsschnittansicht auf die Nockenwellen während des Schleifvorgangs,
- Fig. 9: eine perspektivische Ansicht des Verschiebevorgangs des Wälzlageraußenrings von dem Trägerring auf den Nadelkranz,
- Fig. 10: eine perspektivische Ansicht auf die Nockenwelle mit auf dem Wälzlager sitzendem Außenring, ohne Trägerring,
- Fig. 11: eine Längsschnittansicht auf die Nockenwelle mit endmontiertem Wälzlager,
- Fig. 12: eine Längsschnittansicht auf die Nockenwelle mit endmontiertem Wälzlager, mit Fixierzapfen.

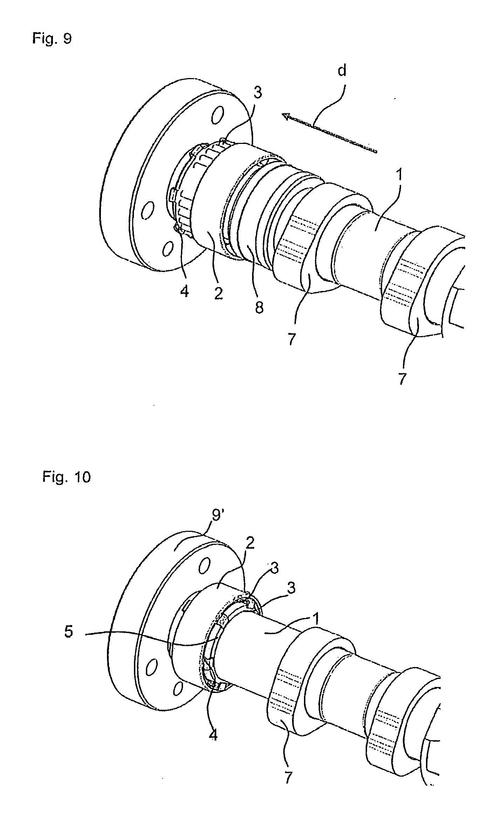

Wie Fig. 10, 11 und 12 zeigen, umfasst eine erfindungsgemäße Nockenwelle, die vorliegend bevorzugt eine durch Innenhochdruckumformung gefertigte Welle 1 ist, am Ansatz der Welle einen Abschiussflansch 9' bzw. ein in den Figuren nicht dargestelltes Zahnrad. Unmittelbar benachbart zu dem Abschlussflansch 9' kommt eine erfindungsgemäß zwischen Lagerinnenring 5 und Lageraußenring 2 angeordnete Wälzlagereinlage 3 zu liegen.

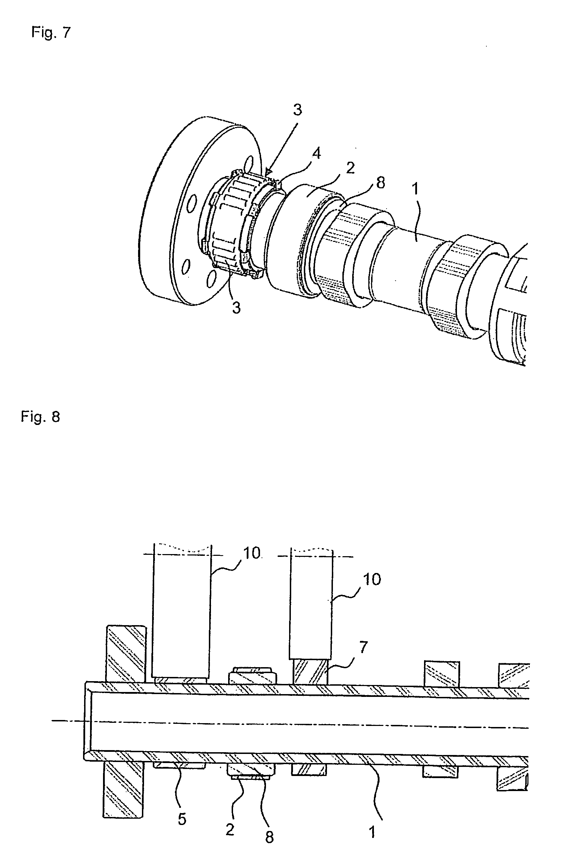

Es kann sich bei der Wälzlagereinlage 3 um den in Fig. 7 oder 9 gezeigten Nadelkranz handeln. Alternative Einlagen können jedoch auch ein Käfig mit Kugeln oder mit Rollen oder andere geeignete Wälzlagereinlagen sein.

In Fig. 10 wird der Wälzlageraußenring 2 gezeigt, der eine Wälzlagereinlage 3 umgibt, an deren Umfang sich äquidistant angeordnet Halteklammern 4 in axialer Richtung von der Wälzlagereinlage 3 weg erstrecken und einen unmittelbar auf der Nockenwelle, 1 sitzenden Lagerinnenring 5 haltend umgreifen. Die gezeigte Anordnung von Halteklammern 4 ist lediglich beispielhaft zu verstehen, Anzahl und Form von Halteklammern generell und auch die Beabstandung der Haiteklammem zueinander kann in anderen Ausführungsformen anders ausgestaltet sein.

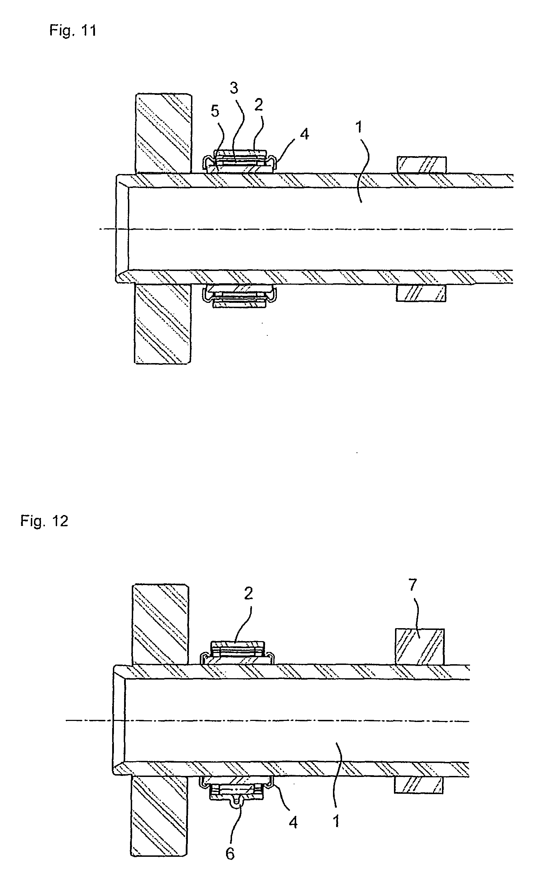

Beabstandet von dem Wälzlager sind zwei Nocken 7 angeordnet. Die Funktionalität der Halteklammern 4 wird in Fig. 11 verdeutlicht: Dort ist zu sehen, wie die Halteklammern 4 den ummittelbar auf der Nockenwelle 1 angeordneten Innenring 5, auf dem sich die Wälzlagereinlage 3 abstützt, umklammern. Wie dort gezeigt ist, wird die Wälzlagereinlage 3 von einem Wälzlageraußenring 2 schützend umgeben.

Der in Fig. 11 gezeigte Gegenstand ist in einer anderen Positionierung auch in Fig. 12 dargestellt. Dort wird der erfindungsgemäß auf dem Wälzlageraußenring 2 bereitgestellte Zapfen 6 gezeigt, der der axialen und radialen Positionierung des Wä!z!ageraußenrings 2 in der Lageraufnahme, die von Lagerdeckeln des Zylinderkopfes gebildet wird, dient. Der Zapfen 6 kann grundsätzlich auch alternative Formen aufweisen. Beispielsweise können Zapfen 6 und Wälzlageraußenring 2 auch mehrteilig ausgeführt sein. Vorteilhaft handelt es sich jedoch um ein geschlossenes, fixierendes Element, das an der Außenseite des Wälzlageraußenrings 2 vorgesehen ist. Weiter ist die Anordnung der Nocken 7 in Bezug auf die Wälzlagervorrichtung und den Abschlussflansch 9' gezeigt. Vorteile des erfindungsgemäß auf der Nockenwelle 1 angeordneten Wälzlager liegen insbesondere in dem der Fixierung dienenden, in Fig. 12 gezeigten Zapfen 6; ein weiterer, besonderer Vorteil ergibt sich jedoch durch das im Nachfolgenden beschriebene erfindungsgemäße Montageverfahren, das durch die Zuhilfenahme der erfindungsgemäßen Montagevorrichtung ausführbar wird.

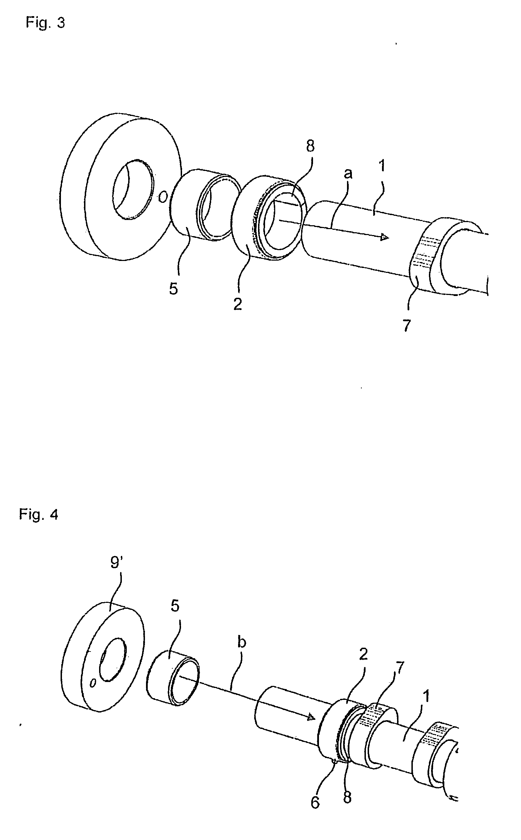

Die erfindungsgemäße Montageanordnung bzw. Vorrichtung zur Montage des Wälzlager auf der Nockenwellen1 umfasst dabei einen elastischen Trägerring 8, der in Fig. 3 bis 6 deutlich zu sehen ist. Dieser elastische Trägerring 8 trägt einen Wälzlageraußenring 2, der später als schützendes Funktionselement die Wälzlagereinlage 3 umgeben wird. Die Explosionsansicht in Fig. 3 und 4 zeigt die Anordnung der Montagevorrichtung auf der Nockenwelle 1:
Zunächst wird der elastische Trägerring 8, der den Wälzlageraußenring 2 trägt, auf die Welle 1 aufgeschoben, siehe Pfeil a, gefolgt von einem Wätzlagerinnenring 5, siehe
Pfeil b. Abschließend wird ein Abschlussflansch 9' auf die Welle 1 geschoben. Fig. 4 zeigt entsprechend den bereits auf der Nockenwelle 1 angeordneten elastischen Trägerring 8, der den Außenring 2 mit Zapfen 6 trägt.

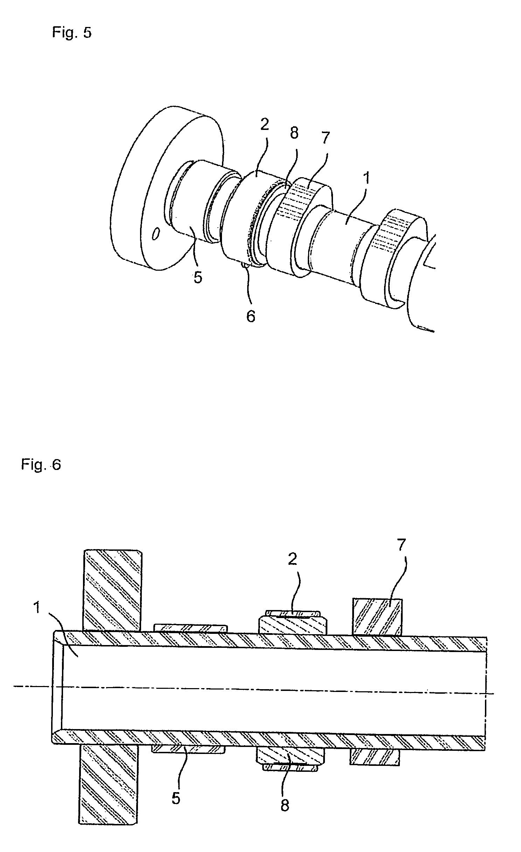

Dem Aufschieben dieser sogenannten Funktionselemente folgt das Fügen. Fig. 5 zeigt die vorgenannten Komponenten, angeordnet auf der Welle 1. Der Fügevorgang kann dabei sequentiell an der Stelle des entsprechenden Funktionsetements erfolgen, so dass zunächst ein Fügen des Trägerrings 8 mit dem Außenring 2 und anschließend ein Fügen des Innenrings 5 und des Abschlussflansches 9' erfolgt.

Es ist jedoch erfindungsgemäß auch möglich, alle Funktionselemente gleichzeitig zu fügen. Das Fügen umfasst ein Aufweiten der Nockenwelle 1, vorliegend insbesondere durch innenhochdruckumformung. Hierzu wird eine sogenannte Aufweitlanze verwendet, die einen axialen Kanal und, abhängig davon, ob sequenziell oder gesamtheitlich aufgeweitet wird, eine oder mehrere Radialbohrungen aufweist, wobei diese von umlaufenden Dichtungsanordnungen axial eingegrenzt sind. Nach Positionieren der Funktionselemente, respektive der Nocken, des Trägerrings 8 mit Außenring 2, des Lagerinnenrings 5 und des Abschlussflanschens 9', wobei es sich hierbei lediglich um eine beispielhafte Ausführung handelt - es können durchaus weitere Komponenten, falls nötig, auf der Nockenwelle 1 angeordnet werden-, wird die Aufweitlanze in die Welle 1 hineingeschoben, bis die Radialbohrungen an der Stelle des jeweiligen Funktionselementes zu liegen kommen. Danach wird über den Axialkanal ein Druckfluid üblicherweise mit über 1.600 bar eingeleitet, das die Welle und das entsprechende Funktionselement aufweitet.

Vorteilhaft ergibt sich hierbei durch die Verwendung der erfindungsgemäßen Montageanordung, die vorsieht, dass ein elastischer, geteilter, entweder geschlitzter oder zweiteiliger Trägerring 8 zum Tragen des Wälzlageraußenrings 2 mit diesem zunächst auf der Welle 1 angeordnet wird, dass der Wälzlageraußenring 2 in einem späteren Arbeitsschritt über die Wälzlagereinlage 3 geschoben werden kann. Beim Innenhochdruckumformen der Welle 1 wird diese an der Stelle des Trägerrings 8 plastisch aufgeweitet. Die Funktionselemente, die auf der Welle 1 verbleiben, werden hingegen elastisch aufgeweitet, so dass sich aufgrund der radialen Zurückfederung ein unlösbarer Presssitz ergibt. Der elastische Trägerring 8 hingegen kann durch seine Zweiteiligkeit oder durch den Schlitz wieder von der Welle, heruntergeschoben werden, wenn er nicht mehr benötigt wird.

So ist es möglich, das Maßschleifen sowohl des Innenrings 5 des Wälzlagers und zugleich das Maßschleifen anderer Lagerringe oder der Nocken, nicht jedoch des Außenrings 2 des Wälzlagers unter Verwendung der Montageanordnung auszuführen, ohne dass es hierbei zu einer Verschmutzung an der Innenseite des Außenrings 2 des Wälzlagers kommt, da dieses an den Trägerring 8 angepresst ist, so dass, so lange der entsprechende Druck aufrecht erhalten ist, keine Schmutzpartikel oder Flüssigkeiten an die Innenseite des Außenringes 2 gelangen können. Der Trägerring 8 schützt folglich den Wälzlageraußenring 2 bis dieser über die Wälzlagereinlage 3 geschoben wird, dann kann er entfernt werden und so die erfindungsgemäße Nockenwelle 1 mit Wälzfager bereitstellen.

Die Wälzlagereinlage selbst kann ebenfalls nicht durch das Maßschleifen der Nocken oder anderer Lager beschmutzt oder feucht werden: Sie wird, da sie erfindungsgemäß ebenfalls zweiteilig oder geschlitzt beschaffen ist, erst im Nachgang auf den bereits perfekt geschliffenen Lagerinnenring 5 aufgebracht. Dies erfolgt, wenn der Lagerinnenring 5 nach dem Schleifen gereinigt und konserviert wurde. So ergibt sich erfindungsgemäß, dass sowohl die Innen- und Außenseiten der Wälzlagereinlage 3 sauber und trocken bleiben, als auch, dass der Wälzlageraußenring 2 an seiner Innenseite unverschmutzt bereits auf der Welle 1 vorliegt und nach Abschluss Schmutz erzeugender Arbeiten auf die Wälzlagereinlage 3 aufgebracht werden kann.

Die Ausführung des Schleifens ist in Fig. 8 gezeigt: Dort ist zu sehen, wie zwei Schleifscheiben 10 am Wälzlagerinnenring 5 und an der Nocke 7 anliegen, um diese mit ihrem Endmaß zu versehen. Der im Zwischenraum zwischen den Schleifscheiben 10 befindliche Wälzlageraußenring 2 wird mit seiner Innenseite durch den Trägerring 8, der elastisch ist, geschützt.

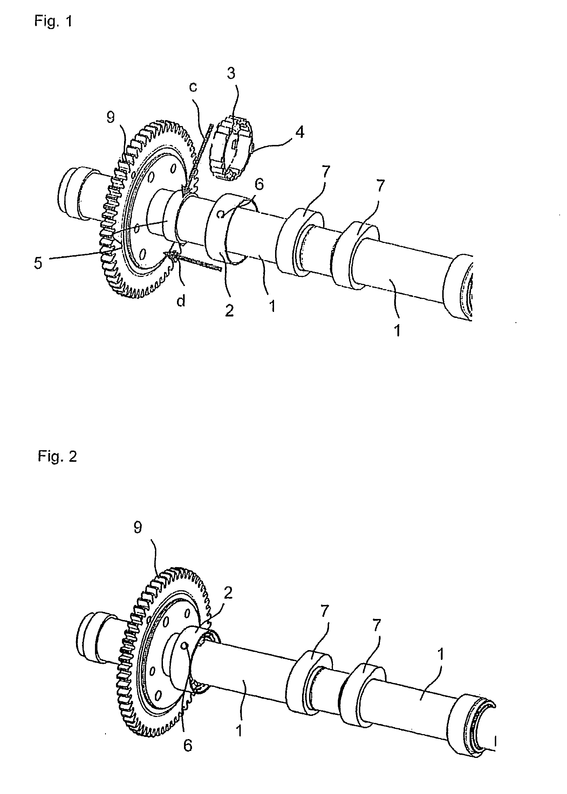

Fig. 6 zeigt ebenfalls die Anordnung der Nockenwelle 1 mit Lagerinnenring 5 und dem Trägerring 8, der den Wälzlageraußenring 2 trägt, nach dem Schleifen auf Endmaß. Nach dem Schleifen erfolgt üblicher Weise ein Schritt des Waschens und Konservierens als Endbearbeitung, ehe nunmehr erfindungsgemäß das Aufbringen der Wälzlagereinlage 3 auf den Wälzlagerinnenring 5 erfolgt. Fig. 1 zeigt den Nadelkranz 3 als eine geeignete Wälzlagereinlage 3. Alternativ können Käfige mit Kugeln und/oder Rollen als Wälzlagereinlage 3 verwendet werden.

Ferner sind als Arretierungselemente des Nadelkranzes 3 Halteklammern 4 zu sehen, die bewirken, dass die Einlage 3 zumindest axial auf dem Innenring 5 festgelegt werden kann. Die Flalteklammern 4 sind vorliegend einstückig mit dem Nadelkranz 3 verbunden, was jedoch nicht zwingend erforderlich ist. Der Nadelkranz 3 ist hier ein geschlitztes, elastisches Element, so dass er (Pfeil c verdeutlich dies) durch Aufklipsen auf den Innenring 5 gesetzt werden kann, ehe der Wälzlageraußenring 2 der Bewegung folgend, die durch Pfeil d angezeigt ist, auf den Nadelkranz 3 aufgeschoben wird. Das Aufschieben des Wälzlageraußenrings 2 auf einen Nadelkranz 3 ist durch Pfeil d in Fig. 9 ebenfalls verdeutlicht. Alternativ könnte die Wälzlagereinlage 3 auch zweiteilig sein.

Die Übertragung des Wälzlageraußenrings 2, wie in Fig. 1 beschrieben, erfolgt, indem der Wälzlageraußenring 2 von dem Trägerring 8 herunter und auf die Wälzlagereinlage 3 geschoben wird. Weisen die Halteklammern 4, wie vorliegend gezeigt, einen radial abstehenden Wulst auf, so wird der Wälzlageraußenring 2 zwischen den Wulsten gehalten, so dass eine axiale Bewegung des Außenrings 2 beim Betrieb der Welle 1 verhindert wird. Nun kann der Trägerring 8 abgenommen werden; die Welle 1 ohne den Trägerring 8 ist in Fig. 10 gezeigt.

Fig. 2 zeigt den auf der Wälzlagereinlage 3 montierten Wälziagervaußenring 2 und einen auf der Nockenwelle 1 angeordneten Zahnkranz 9. Ferner ist in Fig. 2 der Zapfen 6 auf dem Wälzlageraußenring 2 deutlich ersichtlich, der, wie bereits im Zusammenhang mit

Fig. 12 erläutert, der Positionierung (radial und axial) des Wälzlageraußenrings 2 im Zylinderkopf dient. Das oder die Positionierelemente in Form von Zapfen 6 werden in der Lageraufnahme, die von den Lagerdeckeln des Zylinderkopfs gebildet wird, oder einer Bohrung im möglichst lastarmen Bereich unverrückbar gehalten, so dass dem Wälzlageraußenring 2 Nockenwelle 1 eine definierte Position im Zylinderkopf verliehen wird. Durch das Fixierelement, beziehungsweise durch den Zapfen, kann der Monteur die Position des Wälzlageraußenrings 2 im Zylinderkopf auf einfache Weise und ohne Sichtkontakt finden.

## Patentansprüche

1. Vorrichtung, aufweisend eine Nockenwelle (1) mit Wälzlager, das zumindest eine Wälzlagereinlage (3), einen geschliffenen Wätzlagerinnenring (5) und einen Wälzlageraußenring (2) umfasst, wobei der Wälzlagerinnenring (5) auf Nockenwelle (1) angeordnet ist, wobei zwischen dem Wälzlagerinnenring (5) und Wälzlageraußenring (2) die Wälzlagereinlage (3) angeordnet ist,
**dadurch gekennzeichnet**, das
ein elastischer Trägerring (8) vorgesehen ist, der benachbart zu dem Wälzlagerinnenring (5) angeordnet und zum Tragen des Wälzlageraußenrings (2) während eines Schleifens des Wälzlagerinnenrings (5) und der Nockenwelle (1) ausgebildet ist.

2. Vorrichtung nach Anspruch 1,
**dadurch gekennzeichnet, dass**
die Wälzlagereinlage (3) eine elastische und geschlitzte oder starre zweiteilige Wälzlagereinlage (3) ist.

3. Vorrichtung nach Anspruch 2,
**dadurch gekennzeichnet, dass**
die Wälzlagereinlage (3) ein geschlitzter oder ein zweiteiliger Nadelkranz (3), ein Käfig mit Kugeln oder ein Käfig mit Rollen oder ein Käfig mit Rollen und Kugeln ist.

4. Vorrichtung nach einem der Ansprüche 1 bis 3,
**dadurch gekennzeichnet, dass**
an der Wälzlagereinlage (3) eine Mehrzahl von Befestigungsvorrichtungen zur Befestigung der Wälzlagereinlage (3) auf dem Wälzlagerinnenrinig (5) vorgesehen sind.

5. Vorrichtung nach Anspruch 4, **dadurch gekennzeichnet, dass** die Befestigungsvorrichtungen als Halteklammern (4) ausgebildet sind, die zur Befestigung der Wälzlagereinlage (3) auf dem Wälzlagerinnenring (5) geeignet sind, wobei die Halteklammem (4) sich über einen rechten und einen linken Rand der Wälzlagereinlage (3) den Wälzlagerinnenring (5) umgreifend erstrecken.

6. Vorrichtung nach Anspruch 5,
**dadurch gekennzeichnet, dass**
die Halteklammern (4) einstückig mit der Wälzlagereinlage (3) ausgebildet sind.

7. Montageanordnung für ein Wälzlager zur Anordnung auf einer durch Innenhochdruck umformbaren Nockenwelle (1),
**dadurch gekennzeichnet, dass**
die Montageanordnung einen auf der Nockenwelle (1) angeordneten, nicht durchgängigen Trägerring (8) aufweist, der zu einem auf der Nockenwelle (1) angeordneten Lagerinnenring (5) benachbart angeordnet ist,
wobei der Trägerring (8) einen Wälzlageraußenring (2) trägt,
der von dem Trägerring (8) auf eine auf den Lagerinnenring (5) aufbringbare Wälzlagereinlage (3) verschiebbar ist.

8. Montageanordnung nach Anspruch 7,
**dadurch gekennzeichnet, dass**
der nicht durchgängige Trägerring (8) elastisch und geschlitzt oder zumindest zweiteilig ist.

9. Verfahren zur Fertigung einer Nockenwelle (1) mit Wälzlager unter Verwendung einer Montageanordnung nach Anspruch 7 oder 8,
wobei die Nockenwelle (1) eine Mehrzahl an Funktionselementen, umfassend zumindest Nocken (7), trägt,
umfassend die Schritte
- Anordnen des nicht durchgängigen Trägerrings (8), der einen Wälzlageraußenring (2) trägt, auf der Nockenwelle (1),
- Innenhochdruckumformen der die Funktionselemente und den Trägerring (8), tragenden Nockenwelle, (1), dabei plastisch Aufweiten der Nockenwelle (1) und elastisch Aufweiten der Funktionselemente;
- Maßschleifen und Endbearbeiten zumindest der Nocken (7),
- Aufbringen der Wälzlagereinlage (3) auf die Nockenwelle (1) und
- Überführen des Wälzlageraußenrings (2) von dem Trägerring (8) auf die Wälzlagereinlage (3).

10. Verfahren nach Anspruch 9
wobei
als ein Funktionselement ein Wälzlagerinnenring (5) benachbart zu dem Trägerring (8) auf der Nockenwelle, (1) angeordnet wird, und wobei der Schritt des Maßschleifens und des Endbearbeitens auch mit dem Wälzlagerinnenring (5) ausgeführt wird, ehe die Wälzlagereinlage (3) auf den Wälzlagerinnenring (5) aufgebracht wird und der Wälzlageraußenring (2) von dem Trägerring (8) auf die Wälzlagereinlage (3) überführt wird.

11. Verfahren nach Anspruch 9 oder 10,
wobei der Schritt des Aufbringens der Wälzlagereinlage (3) auf die Nockenwelle (1) das Festlegen von an der Wälzlagereinlage (3) bereitgestellten Befestigungsvorrichtungen, insbesondere von Halteklammern (4) umfasst, die sich über einen rechten und einen linken Rand der Wälzlagereinlage (3) den Wälzlagerinnenring (5) umgreifend erstrecken.

## Claims

1. Apparatus, having a camshaft (1) with an anti-friction bearing which comprises at least one anti-friction bearing insert (3), a ground anti-friction bearing inner ring (5) and an anti-friction bearing outer ring (2), the anti-friction bearing inner ring (5) being arranged on the camshaft (1), the anti-friction bearing insert (3) being arranged between the anti-friction bearing inner ring (5) and the anti-friction bearing outer ring (2), **characterized in that** an elastic carrier ring (8) is provided which is arranged adjacently to the anti-friction bearing inner ring (5) and is configured for supporting the anti-friction bearing outer ring (2) during grinding of the anti-friction bearing inner ring (5) and the camshaft (1).

2. Apparatus according to Claim 1, **characterized in that** the anti-friction bearing insert (3) is an elastic and slotted or rigid two-piece anti-friction bearing insert (3).

3. Apparatus according to Claim 2, **characterized in that** the anti-friction bearing insert (3) is a slotted or a two-piece needle ring (3), a cage with balls or a cage with rollers or a cage with rollers and balls.

4. Apparatus according to one of Claims 1 to 3, **characterized in that** a plurality of fastening apparatuses are provided on the anti-friction bearing insert (3) for fastening the anti-friction bearing insert (3) on the anti-friction bearing inner ring (5).

5. Apparatus according to Claim 4, **characterized in that** the fastening apparatuses are configured as holding clips (4) which are suitable for fastening the anti-friction bearing insert (3) on the anti-friction bearing inner ring (5), the holding clips (4) extending beyond a right-hand and a left-hand edge of the anti-friction bearing insert (3) so as to engage around the anti-friction bearing inner ring (5).

6. Apparatus according to Claim 5, **characterized in that** the holding clips (4) are configured integrally with the anti-friction bearing insert (3).

7. Mounting arrangement for an anti-friction bearing for arranging on a camshaft (1) which can be deformed by hydroforming, **characterized in that** the mounting arrangement has a non-continuous carrier ring (8) which is arranged on the camshaft (1) and is arranged so as to adjoin a bearing inner ring (5) which is arranged on the camshaft (1), the carrier ring (8) supporting an anti-friction bearing outer ring (2) which can be displaced from the carrier ring (8) onto an anti-friction bearing insert (3) which can be applied to the bearing inner ring (5).

8. Mounting arrangement according to Claim 7, **characterized in that** the non-continuous carrier ring (8) is elastic and slotted or at least in two pieces.

9. Method for producing a camshaft (1) with an anti-friction bearing using a mounting arrangement according to Claim 7 or 8, the camshaft (1) carrying a plurality of functional elements, comprising at least cams (7), comprising the steps
- arranging of the non-continuous carrier ring (8), which supports an anti-friction bearing outer ring (2), on the camshaft (1),
- hydroforming of the camshaft (1) which carries the functional elements and the carrier ring (8), plastic widening of the camshaft (1) and elastic widening of the functional elements in the process;
- precision grinding and final machining at least of the cams (7),
- applying of the anti-friction bearing insert (3) to the camshaft (1), and
- transferring of the anti-friction bearing outer ring (2) from the carrier ring (8) to the anti-friction bearing insert (3).

10. Method according to Claim 9, an anti-friction bearing inner ring (5) being arranged, as functional element, on the camshaft (1) so as to adjoin the carrier ring (8), and the step of precision grinding and final machining also being performed with the anti-friction bearing inner ring (5) before the anti-friction bearing insert (3) is applied to the anti-friction bearing inner ring (5) and the anti-friction bearing outer ring (2) is transferred from the carrier ring (8) to the anti-friction bearing insert (3).

11. Method according to Claim 9 or 10, the step of applying the anti-friction bearing insert (3) to the camshaft (1) comprising fixing fastening apparatuses, in particular holding clips (4), which are provided on the anti-friction bearing insert (3) and extend beyond a right-hand and a left-hand edge of the anti-friction bearing insert (3) so as to engage around the anti-friction bearing inner ring (5).

## Revendications

1. Dispositif, présentant un arbre à came (1) avec des paliers à roulement, qui comprend au moins une garniture de palier à roulement (3), une bague interne meulée de palier à roulement (5) et une bague externe de palier à roulement (2), la bague interne de palier à roulement (5) étant disposée sur l'arbre à came (1), entre la bague interne de palier à roulement (5) et la bague externe de palier à roulement (2) étant disposée la garniture de palier à roulement (3),
**caractérisé en ce**
**qu'**il est prévu une bague de support élastique (8) qui est disposée à côté de la bague interne de palier à roulement (5) et qui est réalisée pour porter la bague externe de palier à roulement (2) au cours d'un meulage de la bague interne de palier à roulement (5) et de l'arbre à came (1).

2. Dispositif selon la revendication 1,
**caractérisé en ce que**
la garniture de palier à roulement (3) est une garniture de palier à roulement (3) élastique et fendue ou rigide en deux parties.

3. Dispositif selon la revendication 2,
**caractérisé en ce que**
la garniture de palier à roulement (3) est une couronne d'aiguilles (3) fendue ou en deux parties, une cage à billes ou une cage à rouleaux ou une cage à billes et rouleaux.

4. Dispositif selon l'une quelconque des revendications 1 à 3,
**caractérisé en ce**
**qu'**une pluralité de dispositifs de fixation pour la fixation de la garniture de palier à roulement (3) sur la bague interne de palier à roulement (5) sont prévus sur la garniture de palier à roulement (3).

5. Dispositif selon la revendication 4, **caractérisé en ce que** les dispositifs de fixation sont réalisés sous forme de pinces de retenue (4) qui sont appropriées pour la fixation de la garniture de palier à roulement (3) sur la bague interne de palier à roulement (5), les pinces de retenue (4) s'étendant en s'engageant autour de la bague interne de palier à roulement (5) par-dessus un bord droit et un bord gauche de la garniture de palier à roulement (3).

6. Dispositif selon la revendication 5,
**caractérisé en ce que**
les pinces de retenue (4) sont réalisées d'une seule pièce avec la garniture de palier à roulement (3).

7. Agencement de montage pour un palier à roulement destiné à l'agencement sur un arbre à came (1) déformable sous haute pression interne,
**caractérisé en ce que**
l'agencement de montage présente une bague de support (8) non continue, disposée sur l'arbre à came (1), qui est disposée à côté d'une bague interne de palier (5) disposée sur l'arbre à came (1),
la bague de support (8) portant une bague externe de palier à roulement (2),
qui peut être déplacée depuis la bague de support (8) jusqu'à une garniture de palier à roulement (3) pouvant être montée sur la bague interne de palier (5).

8. Agencement de montage selon la revendication 7, **caractérisé en ce que**
la bague de support (8) non continue est élastique et fendue ou est au moins en deux parties.

9. Procédé de fabrication d'un arbre à came (1) comprenant des paliers à roulement en utilisant un agencement de montage selon la revendication 7 ou 8,
dans lequel l'arbre à came (1) porte une pluralité d'éléments fonctionnels comprenant au moins des cames (7),
comprenant les étapes suivantes :
- agencement de la bague de support (8) non continue, qui porte une bague externe de palier à roulement (2), sur l'arbre à came (1),
- déformation sous haute pression interne de l'arbre à came (1) portant les éléments fonctionnels et la bague de support (8), avec élargissement plastique de l'arbre à came (1) et élargissement élastique des éléments fonctionnels,
- meulage à la dimension souhaitée et usinage final d'au moins les cames (7),
- montage de la garniture de palier à roulement (3) sur l'arbre à came (1) et
- transfert de la bague externe de palier à roulement (2) de la bague de support (8) sur la garniture de palier à roulement (3).

10. Procédé selon la revendication 9,
dans lequel on dispose, en tant qu'élément fonctionnel, une bague interne de palier à roulement (5) à proximité de la bague de support (8) sur l'arbre à came (1), et dans lequel l'étape de meulage à la dimension souhaitée et d'usinage final est également réalisée avec la bague interne de palier à roulement (5), avant que la garniture de palier à roulement (3) ne soit montée sur la bague interne de palier à roulement (5) et que la bague externe de palier à roulement (2) soit transférée de la bague de support (8) à la garniture de palier à roulement (3).

11. Procédé selon la revendication 9 ou 10,
dans lequel l'étape de montage de la garniture de palier à roulement (3) sur l'arbre à came (1) comprend la fixation de dispositifs de fixation, en particulier de pinces de retenue (4), prévus sur la garniture de palier à roulement (3), qui s'étendent en s'engageant autour de la bague interne de palier à roulement (5) par-dessus un bord droit et un bord gauche de la garniture de palier à roulement (3).
